# FASCICULE DE BREVET EUROPEEN

(11) **EP 0 332 489 B1**
(45) Date de publication et mention de la délivrance du brevet: **27.01.1993**
(21) Numéro de dépôt: 89400474.6
(22) Date de dépôt: 21.02.1989
(51) Int. Cl.: B23B 5/32

(54) **Dispositif de mise en place d'un véhicule ferroviaire sur un tour à reprofiler les roues**
Stellvorrichtung für ein Eisenbahnfahrzeug auf einer Raddrehbank
Device for placing a railway vehicle on a wheel reconditioning lathe

(30) Priorité: 25.02.1988 FR 8802819
(43) Date de publication de la demande: 13.09.1989
(73) Titulaire: NORD PRODUCTIQUE, F-59605 Maubeuge Cédex (FR)
(72) Inventeur: Pinguet, Michel, F-59168 Boussois (FR)
(74) Mandataire: Descourtieux, Philippe

(56) Documents cités:
- FR-A- 2 170 014
- GB-A- 1 151 827
- US-A- 3 203 286
- US-A- 4 276 793

## Description

La présente invention concerne le reprofilage des roues d'un véhicule ferroviaire et plus précisément un dispositif réalisant la mise en place d'un véhicule ferroviaire sur le tour à reprofiler et la rotation des roues pendant le reprofilage.

L'utilisation d'un véhicule ferroviaire provoque progressivement une usure des tables de roulement des roues, due au contact avec les rails. Cette usure n'est généralement pas répartie de manière égale sur la périphérie de la table de roulement, et il est nécessaire , périodiquement, de reprofiler la roue. Le reprofilage est réalisé par usinage des profils de bandage des roues sur le véhicule, sans démontage des essieux, à l'aide d'un tour en fosse. Le tour de reprofilage est un tour fonctionnant de manière classique , l'axe de tournage étant un axe matérialisé par les paliers des boîtes de roulement des essieux et maintenu fixe pendant le tournage. La rotation de la roue à reprofiler autour de cet axe est assurée par deux galets d'entraînement , appliqués sur la table de roulement de la roue, de part et d'autre de l'outil de tournage.

On comprend que dans les installations de reprofilage de ce type, le véhicule ferroviaire doit être amené au-dessus de la fosse, dans laquelle on a placé le tour, puis une fois que le reprofilage est terminé doit être évacué du dessus de la fosse. Cette mise en place nécessite dans les installations connues une continuité de la voie de chemin de fer jusqu'au-dessus de la fosse, dont une partie doit s'éclipser pour libérer une zone accessible aux outils de coupe et aux galets d'entraînement. Cette partie de voie escamotable consiste en des portions de rails qui, une fois les essieux du véhicule maintenus, coulissent dans le sens de la voie vers l'extérieur de la fosse. Une telle installation de reprofilage comprend donc un dispositif de mise en place du véhicule ferroviaire sur le tour, particulièrement encombrant, en plus du dispositif de mise en rotation des roues.

On a déjà proposé par le brevet US-A-3,203,286 un dispositif perfectionné de mise en place d'un véhicule ferroviaire sur un tour à reprofiler les roues qui comprend pour chaque roue deux galets d'entraînement et un rail de passage en trois tronçons mobiles : le tronçon central est mobile verticalement sous l'action d'un vérin hydraulique, et les deux tronçons latéraux sont montés sur un chariot supportant les deux galets d'entraînement , ledit chariot étant mobile transversalement. Le fonctionnement de ce dispositif connu est le suivant. Le véhicule ferroviaire est amené sur le rail de passage et est placé de telle sorte que la roue soit au droit du tronçon central. Sous l'action du vérin , le tronçon central est levé et soulève la roue. Puis le chariot avance en sorte que les galets d'entraînement se trouvent en position sous la roue. Le tronçon central est abaissé et la roue entre en contact avec les galets d'entraînement .

Ce dispositif comporte donc des moyens indépendants, propres à soulever la roue pendant le positionnement des galets d'entraînement.

Or on a trouvé et c'est ce qui fait l'objet de l'invention un dispositif de mise en place d'un véhicule ferroviaire sur un tour à reprofiler les roues qui ne nécessite pas ces moyens indépendants. Le dispositif comprend de manière connue , pour chaque roue, un chariot coulissant transversalement et supportant deux galets d'entraînement et une portion de rail de passage. Selon l'invention , il comporte des moyens d'appui et un bras oscillant solidaire du chariot et sur lequel sont montés les deux galets et la portion de rail de passage du véhicule, et en ce que le véhicule étant calé en hauteur par les moyens d'appui le chariot coulisse entre une première position où , le bras oscillant étant en position haute et la portion de rail de passage escamotée, les deux galets sont en contact avec la roue correspondante et une seconde position où, le bras oscillant étant en position basse et les galets escamotés, la roue est supportée par la portion de rail de passage .

Ainsi la portion de rail , qui assure la mise en place du véhicule au-dessus de la fosse et son retrait, est en une seule pièce et fait partie intégrante du dispositif de mise en rotation des roues, et
l'escamotage de cette portion de rail se fait par oscillation du bras oscillant . On le comprend, les déplacements respectifs du bras oscillant et du chariot coulissant sont coordonnés : la première position du chariot , pour laquelle les galets d'entraînement sont en contact avec la roue correspondante , n'intervient que lorsque le bras oscillant est dans la position seconde , pour laquelle la portion de rail de passage du véhicule est escamotée ; inversement la première position du bras oscillant, pour laquelle le rail supporte le véhicule , n'intervient que lorsque le chariot coulissant est dans sa position seconde, pour laquelle les galets d'entraînement sont escamotés. De manière connue, lorsque le véhicule est placé au-dessus de la fosse sur le rail de passage, il est ensuite maintenu en hauteur par des appuis, placés par exemple sous les boîtes de roulement. Ce n'est qu'après cette opération de blocage que le rail de passage peut être escamoté.

Cette disposition permet de régler facilement la pression exercée par les galets d'entraînement sur la roue correspondante, en agissant sur les moyens d'oscillation du bras, par exemple un vérin hydraulique.

De préférence, les deux galets d'entraînement sont fixés à l'extrémité double du bras oscillant et la portion du rail de passage est fixée sur la partie supérieure du bras entre l'axe d'oscillation et les galets.

Avantageusement le dispositif de mise en place d'un véhicule ferroviaire sur un tour à reprofiler les roues, selon l'invention, comprend un système de halage dont le tambour enrouleur fait partie du système de transmission de la rotation des galets, ledit système de transmission étant muni de deux embrayages à action inverse l'un pour embrayer la transmission des galets et l'autre pour embrayer le tambour enrouleur. Suivant la position respective des embrayages, le système de rotation entraîne soit les galets soit le tambour enrouleur. Ainsi le dispositif de l'invention peut assurer la mise en place complète du véhicule au-dessus de la fosse, puisqu' il permet de tracter le véhicule le long de la voie jusqu'à la portion de rail de passage, de le placer sur les galets d'entraînement pendant le reprofilage puis inversement de le tracter du rail de passage vers l'extérieur.

De préférence, le système de rotation comprend une poulie d'entraînement , un premier embrayage entre la poulie d'entraînement et l'axe de liaison entraînant la rotation des galets, un second embrayage entre la poulie d'entraînement et le tambour enrouleur du système de halage, le choix de l'embrayage de la poulie d'entraînement étant commandé par la position transversale du chariot, de telle sorte qu'elle est embrayée sur le tambour enrouleur lorsque le chariot est dans sa seconde position où le rail de passage est en position de supporter le véhicule et qu'elle est embrayée sur l'axe de liaison lorsque le chariot est dans sa première position où les galets sont en contact avec la roue.

Grâce au système de halage intégré au dispositif de mise en place, c'est le même élément de puissance qui sert à la fois au halage et à l'entraînement des roues par les galets . Le halage proprement dit est réalisé par tous moyens conventionnels,mettant en oeuvre treuil ou cabestan.

Plus précisément, le dispositif est équipé d'un poussoir, solidaire de l'axe de liaison entraînant la rotation des galets, et le déplacement du chariot provoque le déplacement dudit axe de liaison entre la seconde position où l'axe est débrayé de la poulie et où un ressort maintient l'embrayage du tambour en position embrayée, et la première position où l'axe est embrayé sur la poulie et où le poussoir maintient l'embrayage du tambour enrouleur en position débrayée, le ressort d'embrayage étant comprimé.

L'invention sera mieux comprise à la lecture de la description qui va maintenant être faite du mode préféré de réalisation du dispositif de mise en place d'un véhicule ferroviaire sur un tour à reprofiler les roues, illustré par le dessin annexé dans lequel :
La figure 1 est une vue schématique de face d'une partie d'une roue et de l'outil pendant le reprofilage.
La figure 2 est une vue schématique de côté d'une roue, supportée par deux galets et de l'outil, pendant le reprofilage.
La figure 3 est une vue schématique de face du dispositif en position d'amenée du véhicule sur les rails de passage.
La figure 4 est une vue schématique de face du dispositif en position de reprofilage.
La figure 5 est une représentation schématique du système de rotation des galets et du tambour de halage, en position d'entraînement des galets.
La figure 6 est une représentation schématique du système de rotation des galets et du tambour de halage, en position de halage.

Chaque roue 11 du véhicule ferroviaire s'use lors de son utilisation : cette usure apparaît progressivement par une déformation généralement non régulière de la bande de roulement 12, c'est-à-dire de la zone de la roue qui est en contact avec le rail. Le reprofilage consiste à rectifier la bande de roulement 12 de manière à ce qu'à cet endroit la roue présente un même diamètre. Pour cela l'outil d'usinage 13 attaque la bande de roulement 12 pendant que la roue 11 est entraînée en rotation par les deux galets 14, jusqu'à ce que le diamètre optimal soit atteint.

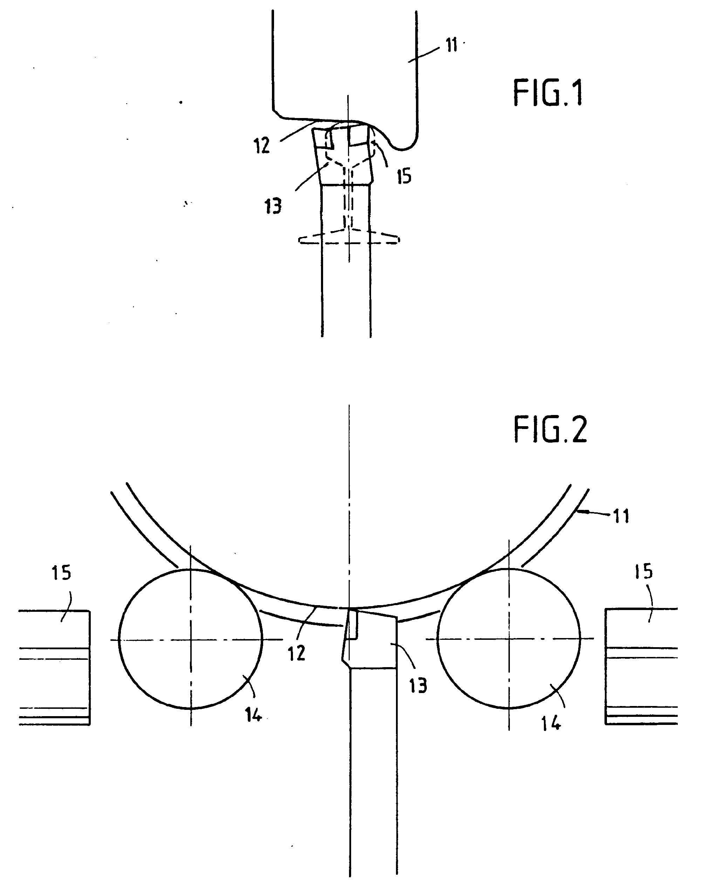

On a représenté sur la figure 2 et en pointillé sur la figure 1 les rails 15 d'amenée du véhicule au-dessus de la fosse dans laquelle est placé le tour de reprofilage.

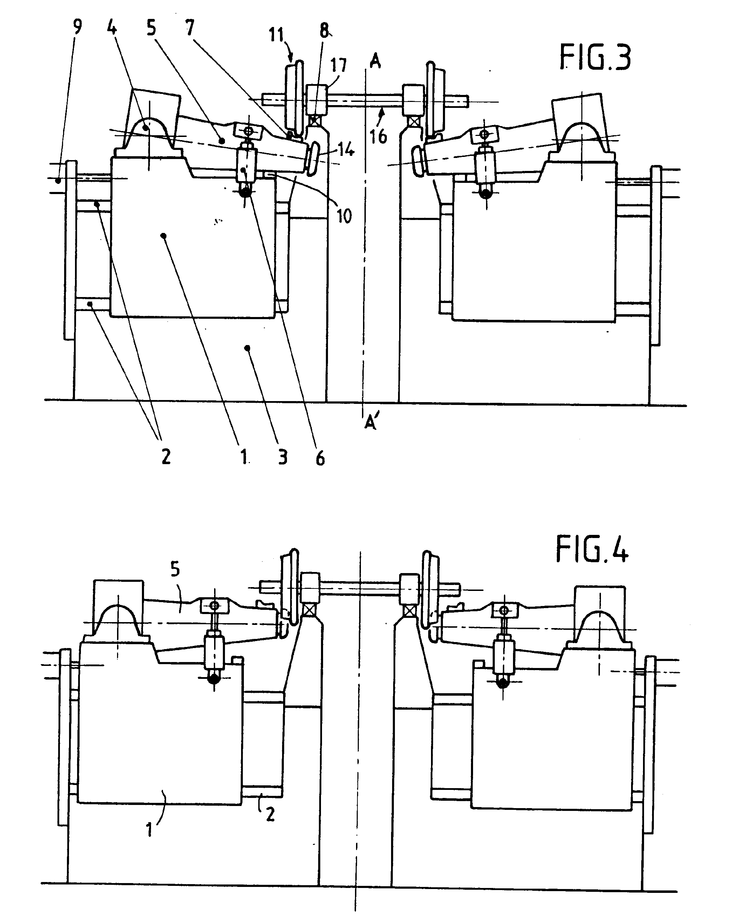

La description qui va être faite ne concerne que la partie du dispositif visant au reprofilage d'une roue 11. Le dispositif comporte , comme cela est montré sur les figures 3 et 4, une partie qui lui est symétrique par rapport à l'axe central AA′ de la voie.

Sur le bâti 3 , sont fixées des glissières 2, sur lesquelles le chariot 1 peut coulisser transversalement par rapport au véhicule dont on n'a représenté que les roues 11, montées sur leur essieu 16. Ce déplacement transversal est obtenu à l'aide du vérin hydraulique 9 fixé au bâti 3. Le chariot 1 supporte à sa partie supérieure deux bras 5 par l'intermédiaire de paliers 4. Chaque bras 5 peut osciller autour de l'axe du palier 4 grâce au déplacement de l'extrémité opposée au palier 4 sous l'action du vérin 6. Chaque bras 5 présente à son extrémité oscillante un galet 14 d'entraînement de la roue 11.Chaque galet 14 est entraîné en rotation, comme cela sera expliqué plus loin. Sur la partie supérieure des deux bras 5 est fixée une portion de rail 7, dont la longueur est déterminée en fonction de celle de la fosse.

La mise en place du véhicule ferroviaire sur la fosse est réalisée de la manière suivante. Avant l'amenée du véhicule, les bras 5 sont en position basse, la tige du vérin 6 étant rentrée et la partie inférieure du bras 5 étant en appui sur la cale 10 ; le chariot 1 est en position avancée, la tige du vérin 9 étant sortie. Dans ces dispositions, la portion du rail 7 se trouve exactement dans l'alignement des extrémités des rails 15 de la voie d'amenée du véhicule.

Lorsque le véhicule a été tracté au-dessus de la fosse, sur la portion de rail 7, l'essieu 16 est calé en hauteur grâce aux cales 8 placées sous les boites de roulement (figure 3).

Puis (figure 4) le chariot 1 est déplacé en position de retrait, la tige du vérin 9 étant rentrée, et les deux bras oscillants 5 sont mis en position haute, la tige du vérin 6 étant sortie. Dans les dispositions, les deux galets 14 sont appliqués sur la bande de roulement 12 de la roue 11. La pression exercée par les deux galets 14 sur la bande de roulement 12 est réglable par la course du vérin 6, en sorte d'obtenir un bon entraînement de la roue 11 lors de la rotation des galets 14. L'outil de reprofilage peut alors travailler.

Lorsque le reprofilage est terminé, les deux séquences précédentes sont reprises en sens inverse de manière d'abord à dégager les galets 14 de la bande de roulement 12 (bras oscillants 5 en position basse) puis à positionner la portion 7 de rail de passage sous la roue 11 (chariot 1 en position avancée).

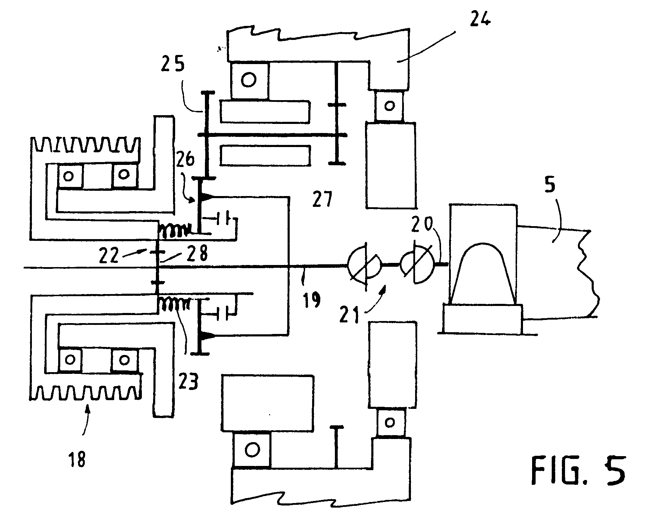

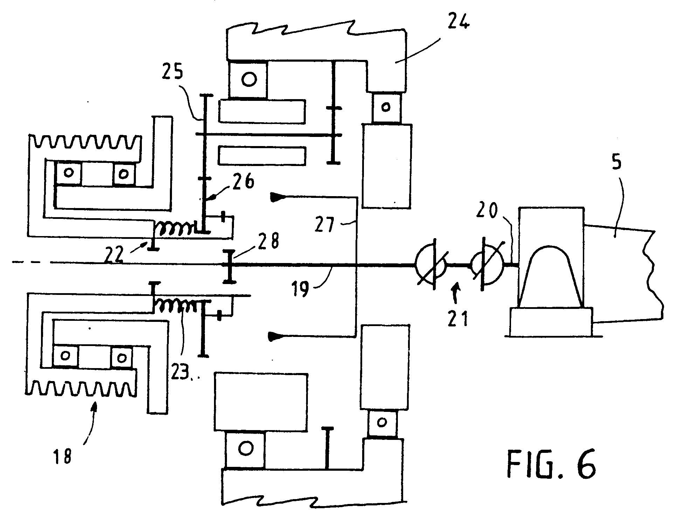

Dans ce mode préféré du dispositif , la mise en place et l'évacuation du véhicule dont les roues sont à reprofiler sur la portion 7 de rail de passage sont réalisées grâce au système de halage intégré, tel qu'il est représenté aux figures 5 et 6.

La poulie 18 assure l'entraînement des galets 14 grâce au système de transmission comprenant deux axes de liaison 19 et 20, reliés entre eux par le cardan 21, le premier axe 19 étant horizontal, alors que le second axe 20 peut suivre grâce au cardan 21 les oscillations de haut en bas des bras 5. Les axes de liaison 19 et 20 sont solidaires du chariot 1, et l'extrémité 28 du premier axe 19 est en regard d'un premier embrayage 22 , de telle sorte que le déplacement transversal du chariot 1 provoque le déplacement des axes 19 et 20, et la mise en position embrayée ou débrayée du premier embrayage 22 sur la poulie 18.

Le tambour enrouleur 24 du système de halage est monté coaxial avec le premier axe 19, et comporte une roue d'entraînement 25.

La poulie 18 est équipée d'un second embrayage 26, assorti d'un ressort 23. Un bras poussoir 27 est fixé au premier axe 19.

L'entraînement par la poulie 18 des galets 14 ou du tambour 24 est réalisé dans les conditions suivantes. Lorsque le chariot 1 est en position de retrait, c'est-à-dire lorsque les galets 14 sont appliqués sur la bande de roulement 12 (position de reprofilage), l'extrémité 28 du premier axe de liaison 19 est enclenchée dans l'embrayage 22 et la rotation de la poulie 18 entraîne en rotation les axes 19 et 20 et les galets 14. De plus le bras poussoir 27 repousse l'embrayage 26, hors du champ de la roue d'entraînement 25 du tambour 24, le ressort 23 étant comprimé; le tambour 24 n'est pas entraîné en rotation.

Lorsque le chariot 1 est en position avancée, c'est-à-dire lorsque la portion 7 du rail de passage est en position de supporter la roue 11 (position d'amenée ou de retrait du véhicule) , l'extrémité 28 du premier axe de liaison 19 est sortie de l'embrayage 22 et ledit axe 19 n'est plus entraîné en rotation par la poulie 18. Par ailleurs, le bras poussoir 27 est écarté de l'embrayage 26,et le ressort 23 repousse l'embrayage 26 au niveau de la roue d'entraînement 25 du tambour 24 ; ainsi le tambour 24 du système de halage est entraîné en rotation par la poulie 18.

Dans la description qui vient d'être faite du mode de réalisation du dispositif de l'invention, on a parlé de deux bras oscillants 5; ces deux bras 5 ont les mêmes fonctions et simultanément les mêmes déplacements. De préférence, il s'agit d'un seul bras solidaire du chariot 1 grâce aux paliers 4 et dont le corps central se sépare en deux extrémités , sur chacune desquelles est fixé un galet d'entraînement 14.

## Revendications

1. Dispositif de mise en place d'un véhicule ferroviaire sur un tour à reprofiler les roues, du type comprenant, pour chaque roue, un chariot (1) coulissant transversalement et supportant deux galets (14) d'entraînement et une portion de rail de passage (7), caractérisé en ce qu'il comporte des moyens d'appui (8) et un bras oscillant (5) qui est solidaire du chariot (4) et sur lequel sont montés les deux galets (14) et la portion de rail de passage (7) du véhicule, et en ce que, le véhicule étant calé en hauteur par les moyens d'appui (8), le chariot (1) coulisse entre une première position où, le bras oscillant (5) étant en position haute et la portion de rail de passage (7) escamotée, les deux galets (14) sont en contact avec la roue (11) correspondante et une seconde position où, le bras oscillant (5) étant en position basse et les galets (14) escamotés, la roue (11) est supportée par la portion de rail de passage (7).

2. Dispositif selon la revendication 1 caractérisé en ce que les deux galets d'entraînement (14) sont fixés à l'extrémité double du bras oscillant (5) et la portion (7) du rail de passage est fixée sur la partie supérieure du bras (5) entre l'axe d'oscillation et les galets (14).

3. Dispositif selon l'une des revendications 1 à 2 caractérisé en ce qu'il comprend un système de halage dont le tambour enrouleur (24) fait partie du système de transmission de la rotation des galets, ledit système de transmission étant muni de deux embrayages (22, 26) à action inverse l'un pour embrayer la transmission des galets (14) et l'autre pour embrayer le tambour enrouleur (24).

4. Dispositif selon la revendication 3 caractérisé en ce que le système de rotation comprend une poulie d'entraînement (18), un premier embrayage (22) entre la poulie d'entraînement et l'axe de liaison (19) entraînant la rotation des galets (14), un second embrayage (26) entre la poulie d'entraînement (18) et le tambour (24) enrouleur du système de halage, le choix de l'embrayage de la poulie (18) d'entraînement étant commandé par la position transversale du chariot (1), de telle sorte qu'elle est embrayée sur le tambour enrouleur (24) lorsque le chariot (1) est dans sa seconde position où la portion de rail de passage (7) est en position de supporter la roue (11) et qu'elle est embrayée sur l'axe de liaison (19) lorsque le chariot (1) est dans sa première position où les galets (14) sont en contact avec la roue (11).

5. Dispositif selon la revendication 4 caractérisé en ce qu'il est équipé d'un poussoir (27) solidaire de l'axe de liaison (19) entraînant la rotation des galets (14) et en ce que le déplacement du chariot (1) provoque le déplacement dudit axe de liaison (14) entre la seconde position où l'axe (19) est débrayé de la poulie (18) et où un ressort (23) maintient l'embrayage (26) du tambour (24) en position embrayée, et la première position où l'axe (19) est embrayé sur la poulie (18) et où le poussoir (27) maintient l'embrayage (26) du tambour enrouleur (24) en position débrayée , le ressort d'embrayage (23) étant comprimé.

## Patentansprüche

1. Stellvorrichtung für ein Eisenbahnfahrzeug auf einer Raddrehbank zum erneuten Profilieren der Räder, von der Art, die für jedes Rad einen Schlitten (1) aufweist, der in Querrichtung gleitbeweglich und zwei Antriebsrollen (14) trägt, und einen Laufschienenabschnitt (7) aufweist, dadurch gekennzeichnet, daß sie Abstützeinrichtungen (8) und einen hin- und hergehenden Arm (5) aufweist, der mit dem Schlitten (4) verbunden ist, und auf dem die zwei Rollen (14) und der Laufschienenabschnitt (7) des Fahrzeugs angebracht sind, und daß, wenn das Fahrzeug in der Höhe durch die Andruckeinrichtungen (8) eingekeilt ist, der Schlitten (1) zwischen einer ersten Stellung, wo, wenn sich der hin- und hergehende Arm (5) in seiner oberen Stellung befindet und der Laufschienenabschnitt (7) eingefahren ist, die beiden Rollen (14) in Kontakt sind mit dem entsprechenden Rad (11), und einer zweiten Stellung gleitet, wo, wenn sich der hin- und hergehende Arm (5) in seiner unteren Stellung befindet und die Rollen (14) eingefahren sind, das Rad (11) durch den Laufschienenabschnitt (7) abgestützt wird.

2. Vorrichtung nach Anspruch 1, dadurch gekennzeichnet, daß die beiden Antriebsrollen (14) am doppelten Ende des hin- und hergehenden Armes (5) befestigt sind und der Laufschienenabschnitt (7) an dem oberen Bereich des Armes (5) zwischen der Schwenkachse und den Rollen (14) befestigt ist.

3. Vorrichtung nach Anspruch 1 oder 2, dadurch gekennzeichnet, daß sie ein Schleppsystem aufweist, dessen Aufwickeltrommel (24) Teil des Übertragungssystems der Drehung der Rollen ist, wobei das Übertragungssystem mit zwei Kupplungen (22, 26) mit umgekehrter Wirkung versehen ist, die eine, um die Übertragung der Rollen (14) zu kuppeln, und die andere, um die Aufwickeltrommel (24) zu kuppeln.

4. Vorrichtung nach Anspruch 3, dadurch gekennzeichnet, daß das Drehsystem eine Antriebsrolle (18), eine erste Kupplung (22) zwischen der Antriebsrolle und der Verbindungsachse (19), die die Drehung der Rollen (14) erzeugt, und eine zweite Kupplung (26) zwischen der Antriebsrolle (18) und der Aufwickelrolle (24) des Schleppsystems aufweist, wobei die Wahl des Kuppelns der Antriebsrolle (18) gesteuert wird durch die Querstellung des Schlittens (1), derart, daß es mit der Aufwickelrolle (24) eingerückt ist, wenn der Schlitten (1) sich in seiner zweiten Stellung befindet, wo der Laufschienenabschnitt (7) in der Stellung ist, daß er das Rad (11) stützt, und daß sie eingerückt ist mit der Verbindungsachse (19), wenn der Schlitten (1) sich in seiner ersten Stellung befindet, wo die Rollen (14) mit dem Rad (11) in Berührung sind.

5. Vorrichtung nach Anspruch 4, dadurch gekennzeichnet, daß sie mit einem Drücker (27) ausgerüstet ist, der mit der Verbindungsachse (19) verbunden ist, die die Rollen (14) in Drehung versetzt, und daß die Bewegung des Schlittens (1) die Bewegung der Verbindungsachse (19) zwischen der zweiten Stellung, wo die Achse (19) von der Rolle (18) abgekoppelt ist, und wo eine Feder (23) die Kupplung (26) der Trommel (24) in eingerückter Stellung hält, und der ersten Stellung hervorruft, wo die Achse (19) mit der Rolle (18) eingekuppelt ist, und wo der Drücker (27) die Kupplung (26) der Aufwickeltrommel (24) in ausgekuppelter Stellung hält, wobei die Kupplungsfeder (23) komprimiert ist.

## Claims

1. Device for positioning a rail vehicle on a lathe for reshaping the wheels, of the type comprising, for each wheel, a carriage (1) sliding transversely and supporting two drive rollers (14) and a portion of running rail (7), characterised in that it comprises bearing means (8) and an oscillating arm (5) which is securely fastened to the carriage (4) and on which the two rollers (14) and the portion of running rail (7) of the vehicle are mounted, and in that, with the vehicle chocked up vertically by the bearing means (8), the carriage (1) slides between a first position where, with the oscillating arm (5) in the top position and the portion of running rail (7) retracted, the two rollers (14) are in contact with the corresponding wheel (11) and a second position where, with the oscillating arm (5) in the bottom position and the rollers (14) retracted, the wheel (11) is supported by the portion of running rail (7).

2. Device according to Claim 1, characterised in that the two drive rollers (14) are fixed at the double end of the oscillating arm (5) and the portion (7) of the running rail is fixed to the upper part of the arm (5) between the axis of oscillation and the rollers (14).

3. Device according to one of Claims 1 to 2, characterised in that it comprises a winching system whose winding drum (24) is part of the transmission system of the rotation of the rollers, the said transmission system being equipped with two clutches (22, 26) with reverse action, one for engaging the transmission of the rollers (14) and the other for engaging the winding drum (24).

4. Device according to Claim 3, characterised in that the rotation system comprises a drive pulley (18), a first clutch (22) between the drive pulley and the linking shaft (19) driving the rotation of the rollers (14), a second clutch (26) between the drive pulley (18) and the winding drum (24) of the winching system, the choice of the clutch of the drive pulley (18) being controlled by the transverse position of the carriage (1), such that it is engaged with the winding drum (24) when the carriage (1) is in its second position where the portion of running rail (7) is in position for supporting the wheel (11) and such that it is engaged on the linking shaft (19) when the carriage (1) is in its first position where the rollers (14) are in contact with the wheel (11).

5. Device according to Claim 4, characterised in that it is equipped with a push rod (27) securely fastened to the linking shaft (19) driving the rotation of the rollers (14) and in that the displacement of the carriage (1) brings about the displacement of the said linking shaft (19) between the second position where the shaft (19) is disengaged from the pulley (18) and where a spring (23) holds the clutch (26) of the drum (24) in the engaged position, and the first position where the shaft (19) is engaged on the pulley (18) and where the push rod (27) holds the clutch (26) of the winding drum (24) in the disengaged position, the clutch spring (23) being compressed.
